Europäisches Patentamt

European Patent Office

Office européen des brevets

(11) Publication number: **0 169 883**
**B1**

# EUROPEAN PATENT SPECIFICATION

(45) Date of publication of patent specification: **13.12.89**

(51) Int. Cl.⁴: **G 02 B 6/44**

(21) Application number: **85900858.3**

(22) Date of filing: **08.01.85**

(86) International application number:
**PCT/US85/00036**

(87) International publication number:
**WO 85/03361 01.08.85 Gazette 85/17**

(54) FIBER OPTIC SOLDERABLE BULKHEAD FITTING.

(30) Priority: **20.01.84 US 572731**

(43) Date of publication of application:
**05.02.86 Bulletin 86/06**

(45) Publication of the grant of the patent:
**13.12.89 Bulletin 89/50**

(84) Designated Contracting States:
**BE CH DE FR GB LI**

(56) References cited:
**EP-A-0 053 020**
**EP-A-0 095 280**
**EP-A-0 125 795**
**GB-A-2 034 068**
**GB-A-2 078 995**
**US-A-4 296 996**
**US-A-4 360 249**
**US-A-4 413 881**
**US-A-4 469 399**

**Patent Abstracts of Japan, vol 6, no.145 (P-132), 4 august 1982 & JP-A-57-6640**

(73) Proprietor: **Hughes Aircraft Company**
**7200 Hughes Terrace P.O.Box 45066**
**Los Angeles California 90045-0066 (US)**

(72) Inventor: **PIKULSKI, Joseph, L.**
**1800 W. Hillcrest Drive, 247**
**Newberry Park, CA 91320 (US)**
Inventor: **RAMER, O., Glenn**
**317 S. Rockingham Avenue**
**Los Angeles, CA 90049 (US)**

(74) Representative: **Kuhnen, Wacker & Partner**
**Schneggstrasse 3-5 Postfach 1553**
**D-8050 Freising (DE)**

(56) References cited:
**Patent Abstracts of Japan, vol. 7, no.51 (P-179), 26 february 1983 & JP-A-57-198**

**Patent Abstracts of Japan,vol.7, no.73 (P-186), 25 march 1983 & JP-A-584104**

**Applied Optics, vol.21, no.19, october 1982, New York, US, S. MASUDA et al.:"Low loss lens connector for single-mode fibers", pages 3475-3483**

Courier Press, Leamington Spa, England.

## Description

This invention is directed to a fiber optic bulkhead fitting.

Optical fibers are suitable for the transmission of digital information and are being increasingly used for that purpose. Optical fibers are superior to the employment of electrical conductors for a number of data transmission needs. However, there has been a problem in passing an optical fiber from one environment, through a bulkhead, to another environment because of the problems of reliably sealing the optical fiber to the bulkhead. Such sealing is necessary to provide sure separation between the spaces separated by the bulkhead. Accordingly, there is need for a bulkhead fitting which is compatible with both the optical fiber and the bulkhead to provide complete and reliable sealing.

Previous attempts at running an optical fiber through a bulkhead and sealing it with respect thereto have been unsatisfactory because of the microbending losses. When epoxy is used to seal an optical fiber with respect to a structure like a bulkhead, the forces on the optical fiber cause local changes in the index of refraction which is the microbending loss. With epoxy, the loss is about 1 decibel. This is a significant loss in such a system and cannot be tolerated in any but short, simple systems.

From patent abstracts of Japan, volume 6, No. 145, page 132, August 1982, a fiber optical bulkhead fitting is known, which is formed on a layer hermetically sealed on the fiber. Said layer is electrodeposited with a prior metal layer serving as electrode. Also from US-A 4 296 a metallic fitting on an optical fiber is coated with a metal film by electrolytic methods. Still further from GB-A-2 034 068 an optical fiber feedthrough is known comprising a metal coating formed on two successive layers deposited onto a bare fiber portion. The optical fiber such prepared is completed by a metal fitting and sealed to a bulkhead.

By electroplating metal fittings to optical fibers instead of using epoxy microbending is omitted.

From EP-A 0 053 020 a fiber optic bulkhead fitting is known which is used as a basis for the preamble of claim 1. Said known fiber optic bulkhead fitting comprises a bulkhead having an opening therethrough, a connector positioned within said opening of the bulkhead and sealed with respect thereto, said connector comprising an optically transmissive member, and first and second optical fibers positioned adjacent said optical transmissive member, such that said first and second optical fibers are in optical communication through said optically transmissive member. Due to the fact that there is a gap between connector and the optical fibers on both sides of the connector, and due to the fact that the optical axes of the optical fibers and the connector may be slightly tilted to each other, a substantial amount of loss is present with such a known bulkhead fitting.

It is thus a purpose and advantage of this invention to provide a fiber optic bulkhead fitting with significally reduced loss by coupling optical signal from one side of the bulkhead fitting to the other and providing improved optical coupling through a bulkhead, respectively.

This purpose is achieved by a fiber optic bulkhead fitting in accordance with claim 1.

Other purposes and advantages of this invention will become apparent from a study of the following portion of the specification, the claims and the attached drawings.

FIG. 1 is a side-elevational view showing the principle of the formation of the built-up structures around optical fibers, as being used in the preferred embodiment of the present invention according to figure 2.

FIG. 2 is an exploded side view, partly in perspective, and with the bulkhead taken in section of a preferred embodiment of the fiber optic bulkhead fitting in accordance with this invention.

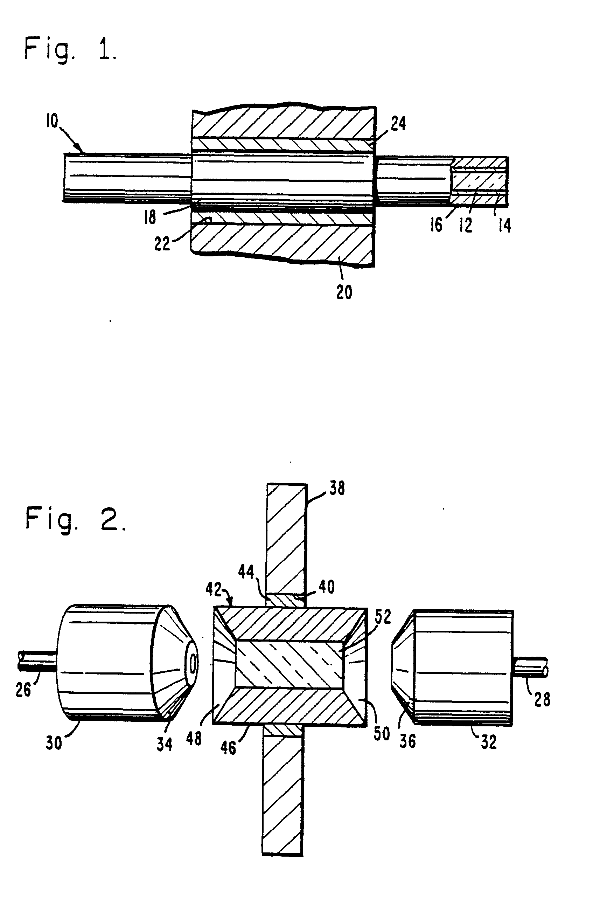

By aid of FIG. 1 the formation of metallic built-up structures around optical fibers is explained in order to facilitate the understanding of the similar built-up structures used in the preferred embodiment according to FIG. 2.

Copper body 18 is a built-up structure on coating 16 of fiber 10 when coating 16 is of an inorganic material such as aluminum. Alternatively, copper body 18 is a built-up structure on optical cladding 14 of fiber 10 when coating 16 is of an organic material, coating 16 being removed therefrom prior to the beginning of the build-up process. When optical cladding 14 is the exterior or material of the fiber, i.e., organic coating 16 removed, the length on which the body 18 is to be deposited can be made conductive by vapor deposition of silver or gold as a first step. Copper is particularly selected because it can be evenly and easily deposited to eliminate localized forces which cause microbending and consequent transmission losses. Other metals would be selected for the built-up structural body when found to be suitable for this even, localized-force-free deposition.

The copper body 18 is built up by electroplating. A suitable electroplating bath is prepared as follows: Two hundred twenty-five grams of copper sulphate are dissolved per liter of water. Fifty-five grams of sulfuric acid are also added per liter to provide the copper plating electrolyte. Added to the plating electrolyte solution is one-half milliliter of UBAC solution No. 1 per liter of electrolyte. This material is available from Udylite-Omic, 21441 Hoover Road, Warren, Michigan 48089. This mixture acts to improve the fineness of the copper grain in the electrolytic buildup. In the alternative, blackstrap molasses is also useful for the purpose of improving the fineness of the copper again.

It is critical to the plating that the plating current be a maximum of 30 mA/cm$^2$ (180 milliamperes per square inch). A higher current accelerates the ions in the plating solution and this, in turn, produces random orientation which results in graininess. Currents lower than the maximum current improve the fineness of the copper grain. The preferred current is 14 mA/cm² (90 milliamperes per square inch). The plating voltage is from 0 to 3 volts, and the electrolyte temperature is maintained at 21 to 32 degree C (70 to 80 degrees F). The concentration of UBAC solution No. 1 in the electrolyte is maintained during the plating operation.

The plating operation must be carefully performed to minimize stresses in the copper plate body which would cause microbending. Microbending, localized changes in the optical fiber's index of refraction, is caused by forces applied to fiber 10. Copper body 18 is thereby deposited without substantial effect upon fiber 10. The result is that the copper body 18 produces a transmission loss of less than 0.l decibels in the fiber. Plating continues until the copper body 18 is built up to the desired size.

FIG. 2 illustrates a preferred embodiment of the bulkhead fitting of this invention. Optical fibers 26 and 28 respectively carry built-up structures 30 and 32 on the facing ends thereof. The built-up structures respectively carry mating surfaces 34 and 36 thereon so that the fibers can be physically positioned as described below. Optical fibers 26 and 28 are the same as optical fiber 10 in FIG. 1 while built-up structures 30 and 32 are built up in the same way as the copper body built-up structure 18 also of FIG. 1.

Bulkhead 38 has an opening 40 therethrough into which is secured connector 42 by means of sealing material 44. Sealing material 44 is compatible with both the body 46 of connector 42 and the bulkhead 38. Sealing material 44 is preferably a solder to provide a secure seal.

Connector 42 has faces 48 and 50 which receive the mating surfaces 34 and 38 to positively align the ends of the optical fibers 26 and 28 respectively. Body 46 is closed in the center by means of window 52 which optically connects the fibers 26 and 28. Window 52 is of suitable optical properties for the wave length to be transmitted and can be a lens such as a Selfoc self-focusing lens, a Fresnel lens, and the lenses may be made of such materials as glass, quartz, sapphire, or germanium, depending upon the optical requirements. In a preferred embodiment, the connector body 46 is built up on window 52 as a copper body built-up structure as previously described. Mating surfaces 34 and 36 as well as their joining faces 48 and 50 are machined to provide the optimum optical coupling.

While the fibers 10, 26 and 28 are described as being metal-coated fibers, and such is the most preferred embodiment, it is also clear that the built-up body can also be plated onto bare fibers or organically coated fibers by first applying an electrically conductive layer, such as an evaporated-on silver or gold film. However, when using organically coated fibers it is preferable to remove the organic coating prior to applying the electrically conductive layer.

## Claims

1. A fibre optic bulkhead fitting comprising:
a bulkhead (38) having an opening (40) therethrough,
a tubular connector (42) positioned within the opening (40) of said bulkhead (38) and sealed with respect thereto, said tubular connector (42) having first and second end faces (48, 50) positioned on opposite sides of said bulkhead (38) and containing an optically transmissive member (52) sealingly extending therewithin up to said endfaces, and
first and second optical fibers (26, 28), each having one end positioned adjacent a different end of said optically transmissive member (52), such that said first and second optical fibers (26, 28) are in optical communication through said optically transmissive member (52),
characterized in that
said first and second optical fibers (26, 28) have first and second metallic built-up structures (30, 32) plated at said one end thereof, respectively, each of said metallic built-up structures (30, 32) having an end face (34, 36) which is frusto-conically shaped,
the end-faces (48, 50) of said connector (42) are concave for accepting the frusto-conical end faces (34, 36) of said first and second metallic built-up structures (30, 32), and
said first and second concave end faces (48, 50) of said connector (42) terminate said optically transmissive member (52) so that when said first and second metallic built-up structures (30, 32) are respectively engaged with said first and second concave end faces (48, 50) said first and second optical fibers (26, 28) are in optical communication through said optically transmissive member (52).

2. The fiber optic bulkhead fitting of Claim 1 further characterized in that said optically transmissive element (52) is a lens.

3. The fiber optic bulkhead fitting of Claim 2 further characterized in that said lens (52) is selected from the group consisting of a Selfoc and Fresnel lens.

4. The fiber optic bulkhead fitting of Claim 3 wherein said lens (52) is made of material selected form the group consisting of glass, quartz, sapphire and germanium.

5. The fiber optic bulkhead fitting according to Claim 1 wherein said connector (42) comprises a metallic body (46) built up on said transmissive member (52).

6. The fiber optic bulkhead fitting of Claim 1 wherein said built-up structures (30, 32) are copper bodies.

7. The fiber optic bulkhead fitting according to Claim 6, wherein said copper bodies (30, 32) are built up on said optical fibres (26, 28) by electroplating.

8. The fibre optic bulkhead fitting according to anyone of the preceding Claims characterized in that said connector (42) and said metallic built-up structures (30, 32) are cylindrical.

9. The fibre optic bulkhead fitting according to anyone of the preceding Claims characterized in that said connector (42) is soldered to said bulkhead (38).

## Patentansprüche

1. Faseroptisches Trennwand-Anschlußstück, welches aufweist:

eine Trennwand (38) mit einer durch diese hindurchgehenden Öffnung (40),

ein innerhalb der Öffnung (40) der Trennwand (38) angeordneter und dazu abgedichteter röhrenförmiger Verbinder (42), der auf gegenüberliegenden Seiten der Trennwand (38) angeordnete erste und zweite Endflächen (48, 50) aufweist und ein sich darin bis zu den Endflächen abgedichtet erstreckendes, optisch durchsichtiges Teil (52) enthält, und

eine erste und eine zweite optische Faser (26, 28), von denen jede ein an ein anderes Ende des optisch durchsichtigen Teiles (52) angrenzend angeordnetes Ende aufweist, so daß sich die erste und die zweite optische Faser (26, 28) über das optisch durchsichtige Teil (52) in optischer Verbindung befinden,

dadurch gekennzeichnet, daß

die erste und die zweite optische Faser (26, 28) jeweils auf einer Seite plattierte erste und zweite metallische, aufgetragene Strukturen (30, 32) aufweist, wobei jede der metallischen, aufgetragenen Strukturen (30, 32) eine abgestumpft konisch geformte Endfläche (34, 36) aufweist,

die Endflächen (48, 50) des Verbinders (42) zur Aufnahme der abgestumpften konischen Endflächen (34, 36) der ersten und der zweiten metallischen, aufgetragenen Struktur (30, 32) konkav sind, und

die erste und die zweite konkave Endfläche (48, 50) des Verbinders (42) das optisch durchsichtige Teil (52) so abschließen, daß sich die erste und die zweite optische Faser (26, 28) beim Eingriff der ersten und der zweiten metallischen, aufgetragenen Struktur (30, 32) jeweils mit der ersten und zweiten konkaven Endfläche (48, 50) über das optisch durchsichtige Teil (52) in optischer Verbindung befinden.

2. Faseroptisches Trennwand-Anschlußstück nach Anspruch 1, dadurch gekennzeichnet, daß das optisch durchsichtige Teil (52) eine Linse darstellt.

3. Faseroptisches Trennwand-Anschlußstück nach Anspruch 2, dadurch gekennzeichnet, daß die Linse (52) aus der Gruppe bestehend aus Selfoc- und Fresnel-Linsen ausgewählt ist.

4. Faseroptisches Trennwand-Anschlußstück nach Anspruch 3, dadurch gekennzeichnet, daß die Linse (52) aus einem Material, das aus der Gruppe bestehend aus Glas, Quarz, Saphir und Germanium ausgewählt ist, hergestellt ist.

5. Faseroptisches Trennwand-Anschlußstück nach Anspruch 1, dadurch gekennzeichnet, daß der Verbinder (42) einen auf dem durchsichtigen Teil (52) aufgetragenen, metallischen Körper (46) aufweist.

6. Faseroptisches Trennwand-Anschlußstück nach Anspruch 1, dadurch gekennzeichnet, daß die aufgetragenen Strukturen (30, 32) Kupferkörper darstellen.

7. Faseroptisches Trennwand-Anschlußstück nach Anspruch 6, dadurch gekennzeichnet, daß die Kupferkörper (30, 32) durch Elektroplattieren auf den optischen Fasern (26, 28) aufgetragen sind.

8. Faseroptisches Trennwand-Anschlußstück nach einem der vorhergehenden Ansprüche, dadurch gekennzeichnet, daß der Verbinder (42) und die metallischen, aufgetragenen Strukturen (30, 32) zylindrisch sind.

9. Faseroptisches Trennwand-Anschlußstück nach einem der vorhergehenden Ansprüche, dadurch gekennzeichnet, daß der Verbinder (42) an die Trennwand (38) gelötet ist.

## Revendications

1. Traversée de cloison pour fibre optique comprenant:

une cloison (38) traversée par une ouverture (40),

un connecteur tubulaire (42) placé à l'intérieur de l'ouverture (40) de ladite cloison (38) et étanché dans celle-ci, ledit connecteur tubulaire (42) ayant des première et seconde faces d'extrémité (48, 50) placées sur des côtés opposés de ladite cloison (38) et contenant un élément optiquement conducteur (52) s'étendant de façon étanche à l'intérieur du connecteur et jusqu'aux dites faces d'extrémité, et

des première et seconde fibres optiques (26, 28), ayant chacune une extrémité placée adjacente à une extrémité différente de l'élément optiquement conducteur (52), de sorte que les première et seconde fibres optiques (26, 28) soient en communication optique à travers l'élément optiquement conducteur (52),

caractérisée en ce que

les première et seconde fibres optiques (26, 28) ont des première et seconde structures métalliques déposées (30, 32) fabriquées par placage à leur extrémité précitée, respectivement, chacune desdites structures métalliques déposées (30, 32) ayant une extrémité (34, 36) qui a une forme tronconique,

les faces d'extrémité (48, 50) du connecteur (42) sont concaves pour accepter les faces d'extrémité tronconiques (34, 36) desdites première et seconde structures métalliques déposées (30, 32), et

les première et seconde faces d'extrémité concaves (48, 50) du connecteur (42) terminent l'élément optiquement conducteur (52) de sorte que lorsque les première et seconde structures métalliques déposées (30, 32) sont respectivement engagées dans les première et seconde faces d'extrémité concaves (48, 50), les première et seconde fibres optiques (26, 28) sont en liaison optique à travers l'élément optiquement conducteur (52).

2. Traversée de cloison pour fibre optique conforme à la revendication 1 caractérisée en outre en ce que l'élément optiquement conducteur (52) est une lentille.

3. Traversée de cloison pour fibre optique conforme à la revendication 2 caractérisée en outre en ce que la lentille (52) est choisie dans le groupe constitué par une lentille de Selfoc et une lentille de Fresnel.

4. Traversée de cloison pour fibre optique conforme à la revendication 3 dans laquelle la lentille (52) est faite d'un matériau choisi dans le groupe constitué par le verre, le quartz, le saphir et le germanium.

5. Traversée de cloison pour fibre optique selon la revendication 1 dans laquelle le connecteur (42) comprend un corps métallique (46) déposé sur l'élément conducteur (52).

6. Traversée de cloison pour fibre optique selon la revendication 1 dans laquelle les structures déposées (30, 32) sont des corps en cuivre.

7. Traversée de cloison pour fibre optique selon la revendication 6 dans laquelle les corps en cuivre (30, 32) sont déposés par galvanoplastie sur les fibres optiques (26, 28).

8. Traversée de cloison pour fibre optique selon l'une quelconque des revendications précédentes, caractérisée en ce que le connecteur (42) et les structures métalliques déposées (30, 32) sont cylindriques.

9. Traversée de cloison pour fibre optique selon l'une quelconque des revendications précédentes, caractérisée en ce que le connecteur (42) est soudé à la cloison (38).

Fig. 1.

Fig. 2.